# EUROPÄISCHE PATENTSCHRIFT

(11) **EP 0 636 212 B1**
(45) Veröffentlichungstag und Bekanntmachung des Hinweises auf die Patenterteilung: **17.09.1997**
(21) Anmeldenummer: 94903718.8
(22) Anmeldetag: 19.01.1994
(51) Int. Cl.: F03B 13/08

(54) **MEHRSTUFEN-WASSERDRUCKKRAFTWERK**
MULTI-STAGE HYDRAULIC POWER STATION
CENTRALE HYDRO-ELECTRIQUE A ETAGES MULTIPLES

(30) Priorität: 18.02.1993 CH 580/93
(43) Veröffentlichungstag der Anmeldung: 01.02.1995
(73) Patentinhaber: Götz, Walter, CH-5600 Ammerswil (CH); Kasper, Ruedi, 8264 Eschenz (CH)
(72) Erfinder: GÖTZ, Walter, CH-5600 Ammerswil (CH); KASPER, Ruedi, CH-8264 Eschenz (CH)
(74) Vertreter: Luchs, Willi
(86) Internationale Anmeldenummer: CH9400009
(87) Internationale Veröffentlichungsnummer: WO9419604

(56) Entgegenhaltungen:
- EP-A- 0 545 885
- US-A- 2 801 069
- J.RAABE 'Hydraulische Maschinen und Anlagen. Teile 1-4 in einem band.' , VDI-VERLAG GMBH , DüSSELDORF siehe Seite 674 - Seite 675; Abbildungen 4-12,12A siehe Seite 783 - Seite 786

## Beschreibung

Die Erfindung betrifft ein Wasserkraftwerk mit für eine jeweilige Nutzfallhöhe mehreren Turbinen mit jeweils einem Generator.

Herkömmliche Wasserdruckkraftwerke pflegen aus den Hauptelementen Speichersee, Druckrohr sowie Maschinenhaus mit Turbinen und Generatoren zu bestehen. Dazu kommen noch Einrichtungen zur Hochspannung des Stroms. Die verfügbare Nutzfallhöhe wird gewöhnlich von einem Druckrohr überbrückt, das vom Speichersee in einem Zuge in die Talsohle führt. Ausnahmen mögen durch die Gegebenheiten des Geländes bedingt sein.

Bei einem bekannten Wasserkraftwerk nach der Druckschrift US-PS 2,801,069 sind eine Mehrzahl von Turbinen unmittelbar übereinanderfolgend mit dazwischengeschalteten stationären Leitschaufeln vorgesehen. Die einzelnen Turbinenräder sind dabei jeweils an einen Generator angekoppelt. Diese Anordnung eignet sich insbesondere als Niederdruckkraftwerk, bei dem eine geringe Fallhöhe vorhanden ist. Das Wasser wird dabei nach dem Durchlauf einer Turbine an die nächste weitergeleitet, ohne dass es zwischen zwei Turbinen in der Geschwindigkeit reduziert würde.

Im Lehrbuch "Hydraulische Maschinen und Anlagen" von J.Raabe sind für Hochgebirgsketten mehrere Kraftwerke vorgesehen, die in mehrere Talstufen unterteilt sind. Die einzelnen Nutzfallhöhen von einem Stausee in eine tiefergestellte Talsohle oder dergleichen werden durch Anordnung von einer in dieser Talsohle angeordneten Turbine erzielt, wobei einer jeweiligen Turbine mindestens ein Druckrohr und eine diese mit Wasser beaufschlagende Düse zugeordnet ist. So wird beispielsweise gemäss Bild 4 die von der Topographie gegebene eine Nutzfallhöhe durch eine Turbine genutzt.

Der vorliegenden Erfindung wurde demgegenüber die Aufgabe zugrundegelegt, ein Wasserkraftwerk nach der eingangs erwähnten Gattung zu schaffen, bei dem für eine jeweilige Nutzfallöhe eine Steigerung des Gesamtwirkungsgrades erzielt wird.

Die Aufgabe ist erfindungsgemäss durch das Kennzeichen des Anspruchs gelöst.

In der Figur ist gemäss Beispiel 1 eine prinziphafte Ausführung eines erfindungsgemässen Mehrstufen-Kraftwerks dargestellt. Die Nutzfallhöhe ist dabei in zwei Höhen- oder Teilstufen unterteilt und es ist nach beiden Höhenstufen eine Düse, eine Turbine und ein nicht näher gezeigter Generator vorgesehen, wobei die Düsen jeweils am unteren Ende eines Druckrohres angeordnet sind. Diese Turbinen können in an sich herkömmlicher Weise gebaut sein und es erübrigt sich daher eine detaillierte Erläuterung derselben.

Das Wasser gelangt von einem Speichersee in ein Druckrohr der oberen Höhenstufe und nachfolgend durch die Düse am unteren Ende des Druckrohres auf die Turbine. Nach dieser Turbine zwischen den beiden Höhenstufen ist ein Sammelbecken vorgesehen, welches das die Turbine verlassende Wasser aufnimmt und in das nachfolgende Druckrohr der unteren Höhenstufe leitet. Das Wasser tritt dann aus der an diesem unteren Druckrohr angeordneten Düse auf die untere Turbine und ist dann in bekannter Art in einen Abfluss geleitet.

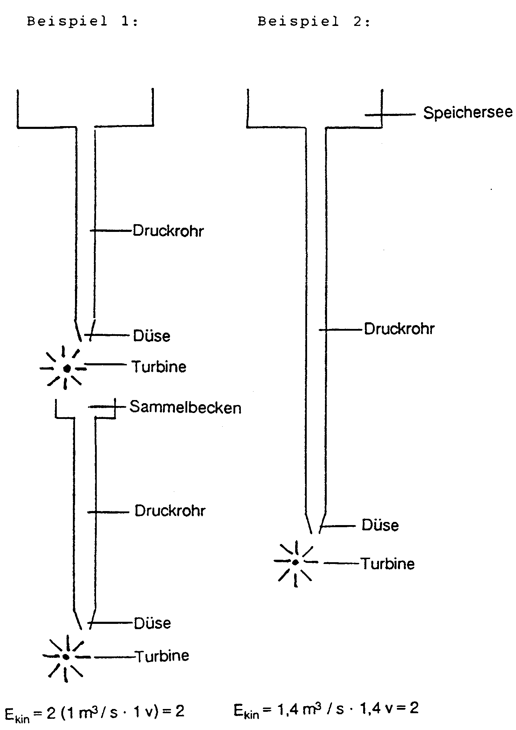

Das erfindungsgemässe Mehrstufen-Wasserdruckkraftwerk nutzt das Gefälle durch Vorsehung von mehreren Teilstufen, jede aus einem Druckrohr mit Düse, einer Turbine mit Generator (samt den zugehörigen Gebäulichkeiten) und einem kleinen Sammelbecken bei der Zwischenstufe für das die Turbine verlassende Wasser, welch letzteres seinen Inhalt dem Rohr der nächsten Etappe zuleitet. Zeichnungen, Figur 1, Prinzipskizze.

Nach erfolgten Untersuchungen muss durch dieses Verfahren die Energieausbeute für gleiche Wassermengen pro Zeiteinheit ganz wesentlich gesteigert werden. Ein einfaches Beispiel: Die Nutzfallhöhe eines kleinen Kraftwerkes betrage 10 m. Man unterteilt sie in zwei Stufen zu 5 m und bringt unterhalb jeder eine Turbine mit Generator an. Die Geschwindigkeit des Wassers am Ende jeder Stufe beträgt dann ≈ 10 m/s, und wenn man die kinetische Energie als das Produkt aus Masse und Geschwindigkeit auffasst, so erhält man 1 (m v) (m = Masse, v = Geschwindigkeit). Die Masse lässt sich bei Flüssigkeiten am zweckmässigsten in m³/s oder einer dazu proportionalen Einheit bemessen.

Lässt man das Wasser in konventioneller Weise durch ein 10 m langes Rohr mit Düse gleichen Kalibers wie in der neuen Konstruktion fallen, so hat es beim Ausströmen ≈ 14 m/s Geschwindigkeit. Zugleich strömt die ≈ 1,4fache Masse Wasser aus (m³/s), so dass die Angabe der Elektroindustrie richtig sein dürfte, doppelte Höhe ergäbe doppeltes Energiequantum, denn 1,4fache Masse mal 1,4fache Geschwindigkeit muss auf dieses Ergebnis hinführen. Aber die verbrauchte Wassermenge ist gegenüber der gestuften Anordnung 1,4fach.

Würde man z.B. 50 m Nutzfallhöhe in zehn 5-m-Schritte unterteilen, so müsste die Ausbeute theoretisch das 3,15fache betragen; allgemein:

Energieausbeute neu = Wurzel aus Nutzfallhöhe konventionell / Stufenhöhe neu.

Im Mehrstufenkraftwerk wird das Wasser in jeder Stufe wieder auf die Geschwindigkeit Null abgebremst, und so wird es insgesamt länger haben, bis es im Tal anlangt. Dies dürfte indessen wirtschaftlich nicht ins Gewicht fallen.

## Patentansprüche

1. Mehrstufen-Wasserkraftwerk, welches für eine Nutzfallhöhe mehrere Turbinen mit jeweils einem Generator aufweist, gekennzeichnet durch Unterteilung der Nutzfallhöhe in mehrere Höhenstufen, wobei nach jeder Höhenstufe eine Turbine mit Generator und ein Sammelbecken für das zwischen zwei Höhenstufen die Turbine verlassende Wasser vorgesehen ist.

2. Mehrstufen-Wasserkraftwerk nach Anspruch 1, dadurch gekennzeichnet, dass durch die Anordnung des Sammelbeckens das Wasser bei jeder Zwischenstufe wieder auf die Geschwindigkeit Null abgebremst wird.

## Claims

1. Multi-stage hydraulic power station, which for an available height having several turbines each with a generator, characterised in that the available height is divided in several partial stages, whereby after each partial stage a turbine with a generator and a collector tank for the water leaving the turbine between two partial stages are provided.

2. Multi-stage hydraulic power station according to claim 1, characterised in that at each partial stage due to the disposition of the collector tank, the water is again braked to the velocity zero.

## Revendications

1. Centrale hydro-éléctrique à étages multiples, se servant des plusieurs turbines - dont à chacune à un générateur - pour la hauteur utilisable, caractérisée par la partition de la hauteur utilisable en plusieurs étages, en quoi pour chaque étage est prévu une turbine avec un générateur et un réservoir pour l'eau quittant la turbine entre deux étages.

2. Centrale hydro-éléctrique selon la revendication 1, caractérisée par la disposition de le réservoir l'eau arrêtant en chaque intérmediare chaque fois à la vitesse zéro.
